# EUROPEAN PATENT APPLICATION

(11) **EP 4 517 664 A1**
(43) Date of publication of application: **05.03.2025**
(21) Application number: 23795919.2
(22) Date of filing: 08.03.2023
(51) Int. Cl.: G06T 7/60, G01B 11/26

(54) **RELATIVE ANGLE DETECTION DEVICE FOR COUPLED VEHICLES**

(30) Priority: 28.04.2022 JP 2022074934
(71) Applicant: JTEKT Corporation, Kariya-shi, Aichi 448-8652 (JP); J-Quad Dynamics Inc., Tokyo 103-0022 (JP)
(72) Inventor: TOKORO, Hirotaka, Tokyo 103-0022 (JP); NITTA, Nobuhiro, Tokyo 103-0022 (JP)
(74) Representative: Winter, Brandl - Partnerschaft mbB
(86) International application number: PCT/JP2023/008843
(87) International publication number: WO 2023/210172

(57) **Abstract**

(Problem) To provide a relative angle detection device for a combination vehicle that can detect a relative angle of a towed vehicle with respect to a towing vehicle without installing on the towed vehicle a marker to be captured to detect the relative angle of the towed vehicle with respect to the towing vehicle. (Solution) A relative angle detection device 6 is used in a combination vehicle 1 in which a towing vehicle 2 and a towed vehicle 3 are connected by a towing-side connecting member 4 and a towed-side connecting member 5. The relative angle detection device 6 includes: an imaging device 61 that captures an image of one of the towing vehicle 2 and the towed vehicle 3 from the other; a radiation device 62 that emits marker light to a position where the image is to be captured by the imaging device 61; and an image analysis device 63 that analyzes the image captured by the imaging device 61 to detect a relative angle of the towed vehicle 3 with respect to the towing vehicle 2.

## Description

### Technical Field

The present invention relates to relative angle detection devices for combination vehicles that are used in combination vehicles in which a towed vehicle is towed by a towing vehicle and that detect a relative angle of the towed vehicle with respect to the towing vehicle.

### Background Art

A combination vehicle is known which is composed of a towed vehicle and a towing vehicle that are connected to each other and which can detect a hitch angle that is an angle of the towed vehicle with respect to the towing vehicle when the combination vehicle is viewed from above.

A trailering assist system described in PTL 1 captures an image of a target on a towed vehicle (trailer) by a camera disposed at the rear of a towing vehicle and detects a hitch angle by analyzing the captured image. A marker with a predetermined shape, such as an icon, provided on the front of the towed vehicle, is used as the target. For example, FIG. 1 of PTL 1 shows a panel with a cross-shaped figure on it as a target.

### Citation List

### Patent Literature

PTL 1: US patent No. 9950738

### Summary of Invention

### Technical Problem

Systems that detect a hitch angle based on an image of a target on a towed vehicle, such as the trailing assist system described in PTL 1, require a panel, a sheet, etc. that serves as a target to be installed on the front of a towed vehicle, which increases the burden of installation of the systems. Installation of the target may affect the external appearance of the towed vehicle.

Therefore, an object of the present invention is to provide a relative angle detection device for a combination vehicle that can detect a relative angle of a towed vehicle with respect to a towing vehicle without installing on the towed vehicle a marker to be captured to detect the relative angle of the towed vehicle with respect to the towing vehicle. Solution to Problem

In order to achieve the above object, the present invention provides a relative angle detection device for a combination vehicle. The relative angle detection device is used in the combination vehicle in which a towing vehicle and a towed vehicle are connected by a towing-side connecting member and a towed-side connecting member. The relative angle detection device includes: an imaging device that captures an image of one of the towing vehicle and the towed vehicle from the other; a radiation device that emits marker light to a position where the image is to be captured by the imaging device; and an image analysis device that analyzes the image captured by the imaging device to detect a relative angle of the towed vehicle with respect to the towing vehicle.

### Advantageous Effects of Invention

According to the present invention, it is possible to detect the relative angle of the towed vehicle with respect to the towing vehicle without installing on the towed vehicle a marker to be captured to detect the relative angle of the towed vehicle with respect to the towing vehicle.

### Brief Description of Drawings

(FIG. 1A) FIG. 1A is a schematic diagram of a combination vehicle whose relative angle is to be detected according to an embodiment of the present invention, as viewed from above.
(FIG. 1B) FIG. 1B is a schematic diagram of the combination vehicle as viewed from the left in the forward travel direction.
(FIG. 1C) FIG. 1C is a schematic diagram of the combination vehicle as viewed from the rear.
(FIG. 2A) FIG. 2A is a structure diagram showing an example of the structures of a towing-side connecting member and a towed-side connecting member.
(FIG. 2B) FIG. 2B is a sectional view of the towing-side connecting member and the towed-side connecting member that are in a combined state.
(FIG. 3) FIG. 3 is a block diagram showing an example of functional configurations of a relative angle detection device.
(FIG. 4) FIG. 4 is a flowchart showing an example of the procedure of a process that is performed by the relative angle detection device.
(FIG. 5A) FIG. 5A is an illustration showing the positions where an imaging device and a radiation device are disposed in a combination vehicle according to a first example embodiment.
(FIG. 5B) FIG. 5B is an illustration showing the positions where the imaging device and the radiation device are disposed in the combination vehicle according to the first example embodiment.
(FIG. 6A) FIG. 6A is an illustration showing an image captured by the imaging device according to the first example embodiment.
(FIG. 6B) FIG. 6B is an illustration showing an image captured by the imaging device according to the first example embodiment.
(FIG. 7) FIG. 7 is an illustration showing the positions where the imaging device and the radiation device are disposed in a combination vehicle according to a second example embodiment.
(FIG. 8A) FIG. 8A is an illustration of a towed vehicle irradiated with marker light from a radiation device as viewed from a towing vehicle according to the second example embodiment.
(FIG. 8B) FIG. 8B is an illustration of the towed vehicle irradiated with the marker light from the radiation device as viewed from the towing vehicle according to the second example embodiment.
(FIG. 8C) FIG. 8C is an illustration of the towed vehicle irradiated with the marker light from the radiation device as viewed from the towing vehicle according to the second example embodiment.
(FIG. 8D) FIG. 8D is an illustration of the towed vehicle irradiated with the marker light from the radiation device as viewed from the towing vehicle according to the second example embodiment.
(FIG. 9) FIG. 9 is an illustration showing the positions where the imaging device and the radiation device are disposed in a combination vehicle according to a third example embodiment.
(FIG. 10A) FIG. 10A is an illustration of the towed vehicle irradiated with the marker light from the radiation device as viewed from the towing vehicle according to the third example embodiment.
(FIG. 10B) FIG. 10B is an illustration of the towed vehicle irradiated with the marker light from the radiation device as viewed from the towing vehicle according to the third example embodiment.
(FIG. 10C) FIG. 10C is an illustration of the towed vehicle irradiated with the marker light from the radiation device as viewed from the towing vehicle according to the third example embodiment.

### Description of Embodiments

### (Embodiment)

An embodiment of the present invention will be described with reference to the drawings. The embodiment and example embodiments that will be described below are shown as preferred specific examples for carrying out the present invention, and some portions specifically illustrate various technical matters that are technically preferable. However, the technical scope of the present invention is not limited to these specific forms.

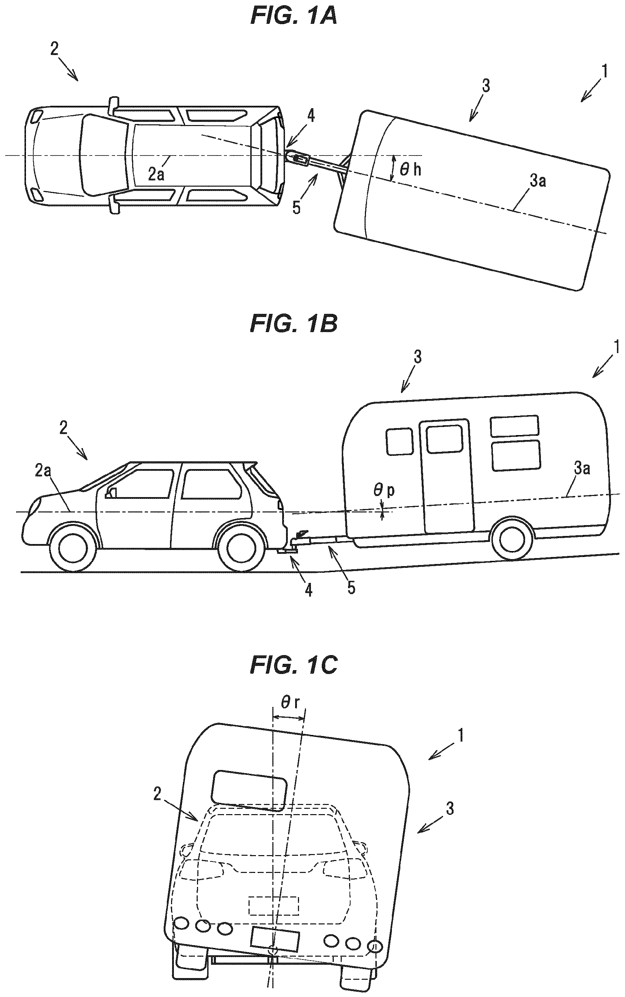

FIGS. 1A, 1B, and 1C are schematic diagrams of a combination vehicle 1 with a relative angle detection device on which the relative angle detection device according to the embodiment of the present invention is mounted. FIG. 1A shows the combination vehicle 1 as viewed from above, and FIG. 1B shows the left side of the combination vehicle 1 in the forward travel direction. FIG. 1C shows the combination vehicle 1 as viewed from the rear. In FIGS. 1A and 1B, each of a center line 2a of a towing vehicle 2 in the front-rear direction of the towing vehicle 2 and a center line 3a of a towed vehicle 3 in the front-rear direction of the towed vehicle 3 is shown by a long dashed short dashed line.

The combination vehicle 1 includes the towing vehicle 2 and the towed vehicle 3, and the towing vehicle 2 and the towed vehicle 3 are connected by a towing-side connecting member 4 and a towed-side connecting member 5. FIGS. 1A, 1B, and 1C show the case where the towed vehicle 3 is a box-shaped camper. However, the towed vehicle is not limited to this, and may be, for example, a boat trailer loaded with a boat. The towing vehicle 2 may be a manually driven vehicle in which a driver performs driving operations such as steering operations, or may be an autonomous vehicle in which part or all of driving operations are performed autonomously.

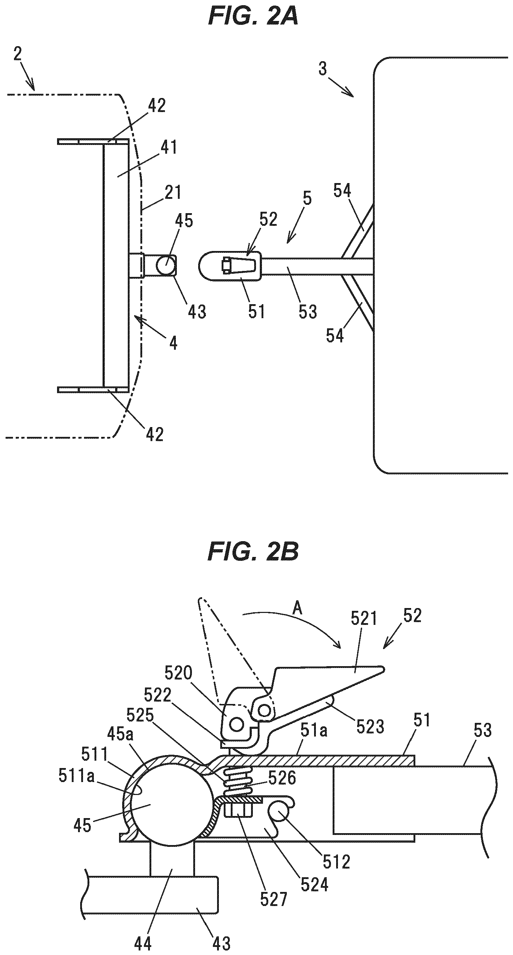

FIG. 2A is a structure diagram showing an example of the structures of the towing-side connecting member 4 and the towed-side connecting member 5. FIG. 2B is a sectional view of the towing-side connecting member 4 and the towed-side connecting member 5 in a combined state.

The towing-side connecting member 4 includes: a hitch cross member 41 disposed along the vehicle width direction of the towing vehicle 2; a pair of hitch side members 42 fixed to both ends of the hitch cross member 41; a ball mount 43 provided so as to protrude from the middle portion in the vehicle width direction of the hitch cross member 41 toward the rear side of the towing vehicle 2; a hitch pin 44 protruding upward from the ball mount 43; and a spherical hitch ball 45 integral with the upper end of the hitch pin 44. The hitch cross member 41 and the pair of hitch side members 42 are disposed inside a rear bumper 21 of the towing vehicle 2, and the ball mount 43, the hitch pin 44, and the hitch ball 45 are exposed to the rear side from the rear bumper 21. The pair of hitch side members 42 is fixed to a body of the towing vehicle 2 by a plurality of bolts.

The towed-side connecting member 5 includes: a coupler 51 that covers the hitch ball 45; a latch mechanism 52 that retains the coupler 51 on the hitch ball 45; a rod-shaped tongue 53 with the coupler 51 fixed to its distal end; and a pair of side beams 54 extending in a direction tilted with respect to the longitudinal direction of the tongue 53. Each of the side beams 54 has its one end connected to the tongue 53. A proximal end of the tongue 53 and the other end of each of the pair of side beams 54 are connected to a chassis of the towed vehicle 3.

As shown in FIG. 2B, the coupler 51 includes a cup portion 511 that holds the hitch ball 45. The latch mechanism 52 includes: a lever support 520; a lever 521 that is rotated with respect to the lever support 520; a latch plate 522 that faces an upper surface 51a of the coupler 51; a latch bar 523 that enters between the upper surface 51a of the coupler 51 and the latch plate 522 when the lever 521 is operated; a lock plate 524 that receives the hitch ball 45 from below; a coil spring 525 that biases the lock plate 524 downward; and a bolt 526 and a nut 527 that connect the latch plate 522 and the lock plate 524.

The lock plate 524 is rotatable about a support pin 512 that is provided horizontally to the coupler 51. When the lever 521 is operated as shown by an arrow A in FIG. 2B, the latch plate 522 is lifted upward with respect to the coupler 51 by the latch bar 523, and the lock plate 524 retains the hitch ball 45. An inner surface 511a of the cup portion 511 of the coupler 51 is a concave spherical surface having a curvature corresponding to the curvature of a surface 45a of the hitch ball 45. The coupler 51 is swingable in any direction about the hitch ball 45 due to sliding between the inner surface 511a of the cup portion 511 and the surface 45a of the hitch ball 45.

In the combination vehicle 1, the relative angle of the towed vehicle 3 with respect to the towing vehicle 2 changes variously. Particularly when the combination vehicle 1 reverses with the towed vehicle 3 located on the front side in the direction of travel, the relative angle of the towed vehicle 3 with respect to the towing vehicle 2 serves as an important indicator when performing driving operations. For this reason, the relative angle detection device is used in the combination vehicle 1. When the towing vehicle 2 is a manually driven vehicle (non-autonomous vehicle), an image showing the detection result from the relative angle detection device is displayed on a display installed inside a cabin of the towing vehicle 2, so that the driver is assisted in driving operations. When the towing vehicle 2 is an autonomous vehicle, the towing vehicle 2 is autonomously steered based on the detection result from the relative angle detection device.

The relative angle of the towed vehicle 3 with respect to the towing vehicle 2 includes: a hitch angle that indicates tilt of the towed vehicle 3 in the horizontal direction with respect to the towing vehicle 2; a relative pitch angle that indicates tilt of the towed vehicle 3 in the up-down direction with respect to the towing vehicle 2; and a relative roll angle that is the difference between a roll angle of the towing vehicle 2 and a roll angle of the towed vehicle 3. FIG. 1A shows a hitch angle θh when the towed vehicle 3 is tilted to the left with respect to the towing vehicle 2. FIG. 1B shows a relative pitch angle θp when the towed vehicle 3 is tilted upward with respect to the towing vehicle 2. FIG. 1C shows a relative roll angle θr when the towed vehicle 3 is tilted clockwise with respect to the towing vehicle 2 as viewed from the rear of the combination vehicle 1.

The relative angle detection device according to the embodiment can detect at least the hitch angle and the relative pitch angle out of the hitch angle, the relative pitch angle, and the relative roll angle. Next, the configuration, placement, and operation of the relative angle detection device will be described.

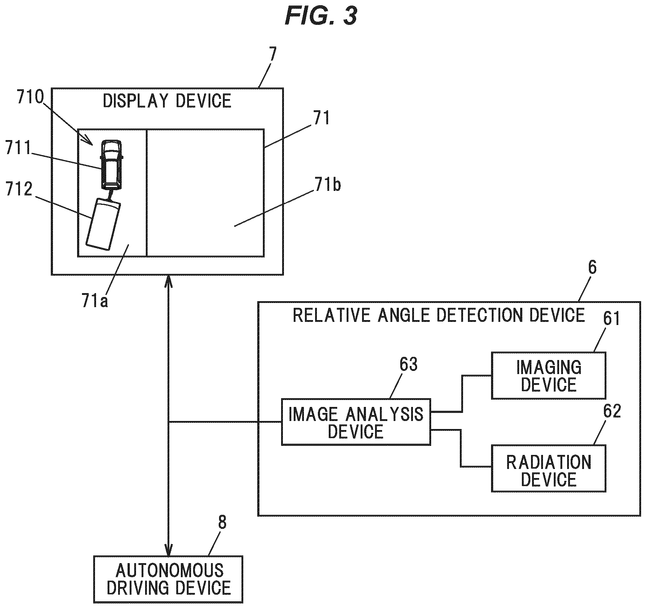

FIG. 3 is a block diagram showing functional configurations of a relative angle detection device 6. The relative angle detection device 6 includes: an imaging device 61 that captures an image of one of the towing vehicle 2 and the towed vehicle 3 from the other; a radiation device 62 that emits marker light to a position where the image is to be captured by the imaging device 61; and an image analysis device 63 that analyzes the image captured by the imaging device 61 to detect the relative angle of the towed vehicle 3 relative to the towing vehicle 2.

The radiation device 62 projects a figure with a predetermined shape by the marker light. The "figure" herein refers to a line segment of a predetermined length, a curve or a polyline, a closed curve such as a polygon or an ellipse, or one or more points. A laser beam with high linearity is used as the marker light. The color of the marker light is not particularly limited. For example, blue, red, or green visible laser light can be used as the marker light. In this case, a visible light camera is used as the imaging device 61. The marker light may be invisible light such as infrared light or ultraviolet light. In this case, a device that can capture light having the wavelength of the marker light, such as an infrared camera, is used as the imaging device 61.

The imaging device 61 captures the figure projected by the marker light emitted from the radiation device 62, and detects the relative angle of the towed vehicle 3 with respect to the towing vehicle 2 from the shape of the captured figure. The detection result of the relative angle is sent to, for example, a display device 7 of the towing vehicle 2, and as shown in FIG. 3, an image showing the detection result from the relative angle detection device 6 is displayed on a display 71 inside the vehicle cabin. FIG. 3 shows a display example in which a bird's-eye view image 710 showing a graphic symbol 711 representing the towing vehicle 2 and a graphic symbol 712 representing the towed vehicle 3 in a tilted state according to the hitch angle detected by the relative angle detection device 6 is displayed in a first display area 71a of the display 71. For example, an image captured by the imaging device 61 is displayed in a second display area 71b of the display 71.

The driver performs steering operations while taking the content displayed on the display 71 into consideration. The display 71 may display an image showing a recommended direction of rotation of a steering wheel according to the hitch angle detected by the relative angle detection device 6. When the towing vehicle 2 is an autonomous vehicle, the detection result from the relative angle detection device 6 is output to an autonomous driving device 8.

The radiation device 62 emits the marker light at least when the combination vehicle 1 reverses. When the towing vehicle 2 is a manually driven vehicle, the radiation device 62 emits the marker light when, for example, a shift lever is shifted to reverse (R) range, and stops emitting the marker light when the shift lever is shifted from R range to a different range. The radiation device 62 may be configured to emit the marker light according to a switch operation by the driver. Even when the combination vehicle 1 moves forward, the state of the towed vehicle 3 may become unstable due to, for example, the slope of the road surface or a cross wind. In such a case, the radiation device 62 emits the marker light according to a switch operation by the driver, and the relative angle detection device 6 detects the hitch angle, etc., so that the driver can be assisted in driving operations. When the towing vehicle 2 is an autonomous vehicle, the radiation device 62 starts and stops emitting the marker light according to a command signal from the autonomous driving device 8.

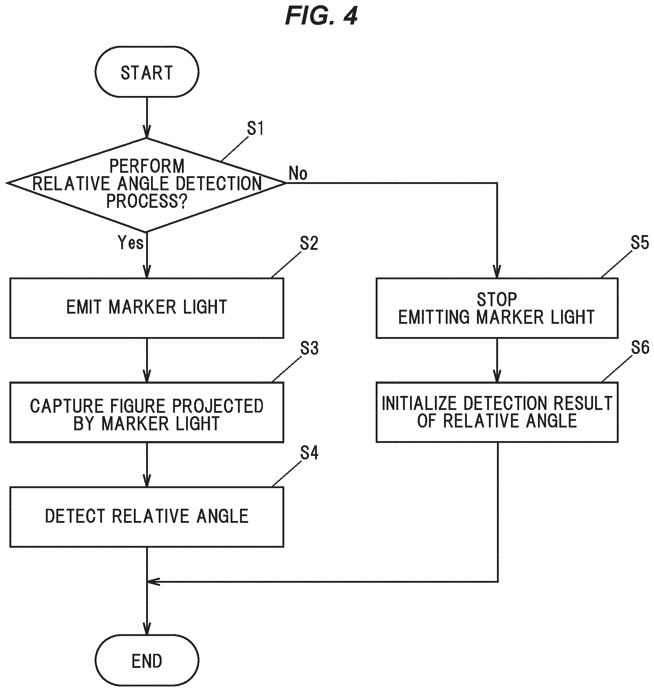

FIG. 4 is a flowchart showing an example of the procedure of a process that is performed by the relative angle detection device 6. The relative angle detection device 6 repeatedly performs the process shown in this flowchart at a predetermined cycle of, for example, several milliseconds to several tens of milliseconds.

The relative angle detection device 6 first determines whether to perform a process of detecting the relative angle of the towed vehicle 3 with respect to the towing vehicle 2 (step S1). As described above, this determination can be made according to, for example, a reverse driving operation or switch operation by the driver or a command signal from the autonomous driving device 8. When the result of this determination is Yes, the radiation device 62 emits the marker light (step S2), and the imaging device 61 captures the figure projected by the marker light (step S3). Information on the image captured by the imaging device 61 is sent to the image analysis device 63.

The image analysis device 63 analyzes the image captured by the imaging device 61 to detect the relative angle of the towed vehicle 3 with respect to the towing vehicle 2 (step S4). The analysis in step S4 can be performed by, for example, storing in advance the shape of the marker light that would be obtained when all of the hitch angle, the relative pitch angle, and the relative roll angle are zero as a reference shape, comparing the reference shape with the shape of the marker light in the image captured by the imaging device 61 to obtain the amount of change in shape, and converting this amount of change to the relative angle. The relative angle in the current cycle may be detected by referring to the detection result of the relative angle in the previous cycle.

On the other hand, when the result of the determination in step S1 is No, the radiation device 62 stops emitting the marker light (step S5), and the image analysis device 63 initializes the detection result of the relative angle (step S6).

### (Example embodiments)

Next, more specific embodiments, namely first to third example embodiments, of the relative angle detection device 6 will be described in detail.

### (First example embodiment)

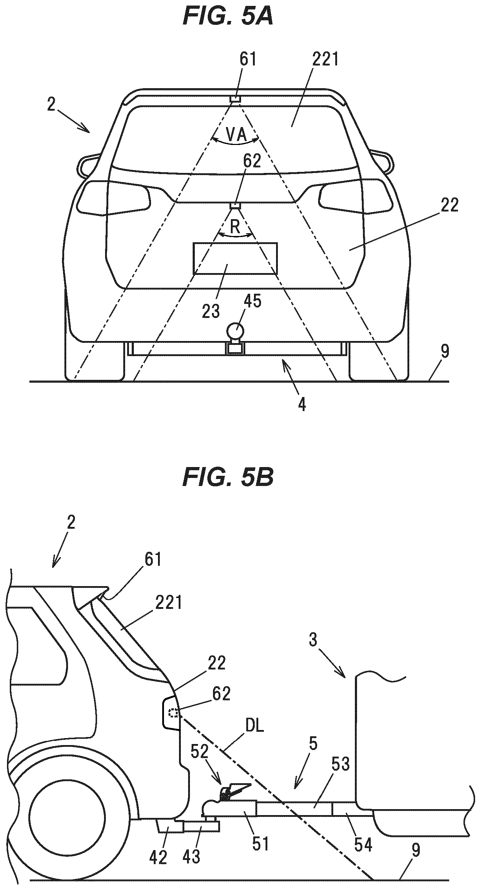

FIGS. 5A and 5B are illustrations showing the positions where the imaging device 61 and the radiation device 62 are disposed in the combination vehicle 1 according to a first example embodiment. FIG. 5A shows the rear side of the towing vehicle 2 as viewed from the towed vehicle 3. FIG. 5B shows the towing-side connecting member 4, the towed-side connecting member 5, part of the towing vehicle 2, and part of the towed vehicle 3, as viewed from the left side of the towing vehicle 2.

In the first example embodiment, the imaging device 61 and the radiation device 62 are mounted on the rear end of the towing vehicle 2. More specifically, the imaging device 61 and the radiation device 62 are mounted on the outer side of a backdoor 22 of the towing vehicle 2. The radiation device 62 is mounted at a position between a license plate 23 and a rear glass 221 of the backdoor 22. The imaging device 61 is disposed above the radiation device 62, and captures an image of the towed vehicle 3. In the example shown in FIG. 5A, the imaging device 61 is disposed directly above the radiation device 62. However, the position of the imaging device 61 may be shifted with respect to the radiation device 62 in the vehicle width direction of the towing vehicle 2.

In this example, the figure projected by the marker light emitted from the radiation device 62 is a line segment of a predetermined length parallel to the vehicle width direction of the towing vehicle 2. FIG. 5A shows an angle of view VA indicating the imaging range of the imaging device 61 and a radiation range R of the marker light from the radiation device 62. In FIG. 5B, the direction of the marker light emitted from the radiation device 62 is shown by a long dashed short dashed line DL. The towed-side connecting member 5 and a road surface 9 on both sides of the towed-side connecting member 5 in the vehicle width direction of the towing vehicle 2 are included in the radiation range of the marker light from the radiation device 62. In this example, the radiation device 62 irradiates the tongue 53 of the towed-side connecting member 5. However, the present invention is not limited to this, and the radiation device 62 may irradiate, for example, the coupler 51. The angle of view VA of the imaging device 61 includes the entire radiation range R of the radiation device 62. The road surface 9 is, for example, the surface of a paved public road, but may be unpaved ground or the surface of a parking space in a parking lot.

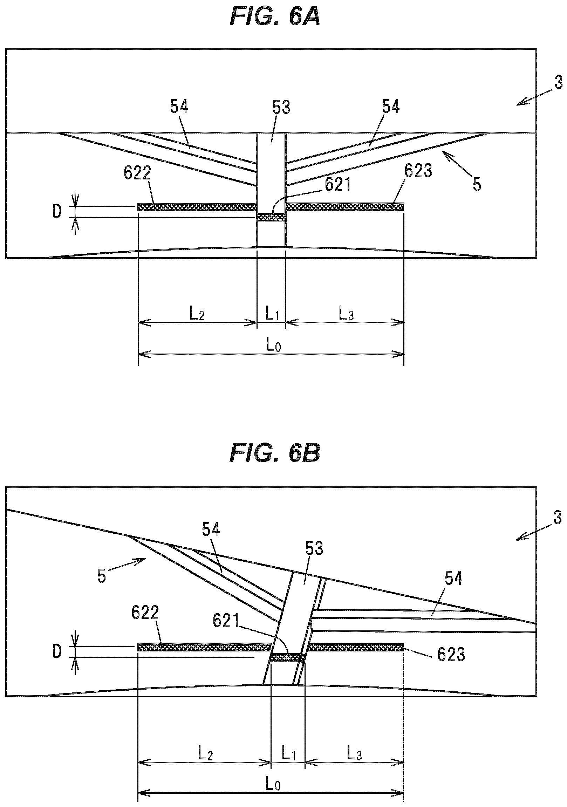

FIGS. 6A and 6B are illustrations each showing an image captured by the imaging device 61. In the following description, the "right side" and the "left side" refer to the right side and left side of the image captured by the imaging device 61. FIG. 6A shows a state in which the towing vehicle 2 and the towed vehicle 3 are aligned in a straight line with a hitch angle of zero. FIG. 6B shows a state in which the towed vehicle 3 is tilted to the right with respect to the towing vehicle 2.

The imaging device 61 is disposed above the radiation device 62. Therefore, in the image captured by the imaging device 61, a first irradiated portion 621 that indicates part of the marker light that is incident on the towed-side connecting member 5 appears above a second irradiated portion 622 that indicates part of the marker light that is incident on the road surface 9 on the left side of the towed-side connecting member 5 and a third irradiated portion 623 that indicates part of the marker light that is incident on the road surface 9 on the right side of the towed-side connecting member 5.

In FIGS. 6A and 6B, L₀ indicates the total length of the first to third irradiated portions 621 to 623 in the left-right direction of the image captured by the imaging device 61, L₁ indicates the length of the first irradiated portion 621, L₂ indicates the length of the second irradiated portion 622, and L₃ indicates the length of the third irradiated portion 623. More specifically, the length L₁ is the length between the left end and right end of a portion of the tongue 53 that is irradiated by the radiation device 62. The length L₂ is the length from the left end of the road surface 9 irradiated by the radiation device 62 to the left end of the portion of the tongue 53 that is irradiated by the radiation device 62. The length L₃ is the length from the right end of the road surface 9 irradiated by the radiation device 62 to the right end of the portion of the tongue 53 that is irradiated by the radiation device 62. The length L₀ is the length from the left end to the right end of the road surface 9 irradiated by the radiation device 62. The lengths L₁, L₂, and L₃ are index values that indicate the position in the vehicle width direction of the towed-side connecting member 5 in the radiation range of the marker light (length L₀).

In the image captured by the imaging device 61, when the midpoint of the length L₀ is set as a reference position, the middle position in the left-right direction of the tongue 53 with respect to the reference position can be calculated by the arithmetic expression L₀/2 - ((L₂ + L₁/2)/(L₁ + L₂ + L₃)) × L₀. Since the positional relationships between the imaging device 61 and the radiation device 62, the hitch ball 45, etc. are known, the hitch angle can be obtained by calculation based on the above arithmetic expression. The image analysis device 63 thus detects the hitch angle of the combination vehicle 1 based on the position in the vehicle width direction of the towed-side connecting member 5 in the radiation range of the marker light.

In the image captured by the imaging device 61, the distance D in the up-down direction between the first irradiated portion 621 and the second irradiated portion 622 and third irradiated portion 623 changes according to the relative pitch angle. Therefore, the relative pitch angle can be calculated based on this distance D. The distance D is an index value that indicates the difference in position in the front-rear direction of the towing vehicle 2 between the towed-side connecting member 5 and the road surface 9 that are irradiated with the marker light. That is, the image analysis device 63 detects the relative pitch angle of the combination vehicle 1 based on the difference in position in the front-rear direction of the towing vehicle 2 between the towed-side connecting member 5 and the road surface 9 that are irradiated with the marker light.

The image analysis device 63 acquires information on the image from the imaging device 61 at a predetermined cycle, calculates the hitch angle and the relative pitch angle, and outputs the hitch angle and the relative pitch angle as the detection result. As the hitch angle increases, the marker light is also incident on the side surfaces in the left-right direction of the tongue 53, and therefore the length L₁ of the first irradiated portion 621 increases accordingly. Therefore, in the calculation for obtaining the hitch angle, it is necessary to correct the middle position in the left-right direction of the tongue 53 by, for example, using the hitch angle calculated in the previous cycle. This correction may be made by referring to map information that stores the relationship between the calculation result of the above arithmetic expression and the actual middle position in the left-right direction of the tongue 53.

### (Second example embodiment)

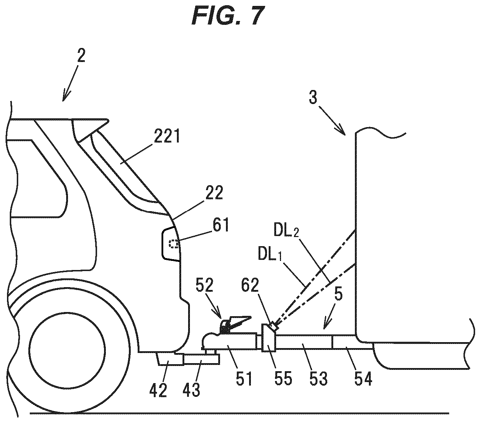

FIG. 7 is an illustration showing the positions where the imaging device 61 and the radiation device 62 are disposed in the combination vehicle 1 according to the second example embodiment. In this example, the imaging device 61 is attached to the rear end of the towing vehicle 2 as in the first example embodiment, but the radiation device 62 is attached to the towed-side connecting member 5. The radiation device 62 is fixed to the tongue 53 by a bracket 55, and irradiates the front end of the towed vehicle 3 obliquely upward. In FIG. 7, the radiation range of the marker light from the radiation device 62 is shown by two long dashed short dashed lines DL₁, DL₂. The imaging device 61 is attached to a position between the license plate 23 and the rear glass 221 of the backdoor 22, and is also used as a camera for a rear monitor.

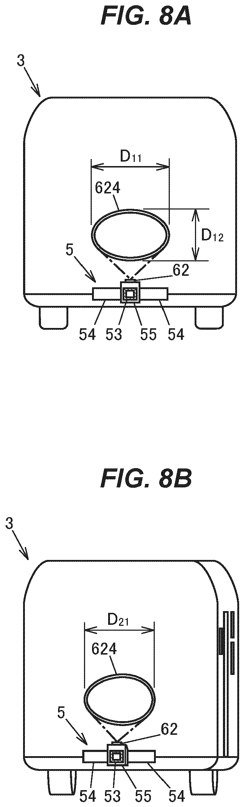

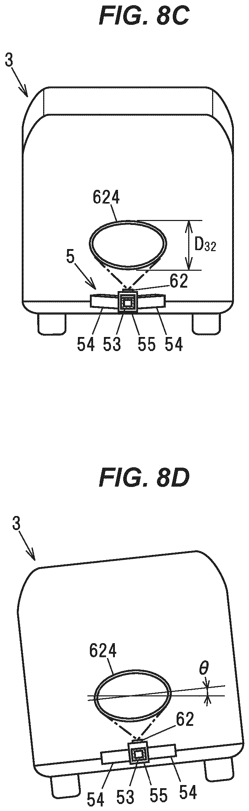

FIGS. 8A, 8B, 8C, and 8D are illustrations of the towed vehicle 3 irradiated with the marker light from the radiation device 62, as viewed from the towing vehicle 2. FIG. 8A shows a state in which all of the hitch angle, the relative pitch angle, and the relative roll angle are zero. FIG. 8B shows a state when the towed vehicle 3 is tilted to the right as viewed from the towing vehicle 2. FIG. 8C shows a state when the towed vehicle 3 is tilted upward. FIG. 8D shows a state when the towed vehicle 3 rolls counterclockwise.

In this example, a projected figure 624 projected by the marker light emitted from the radiation device 62 is an ellipse whose major axis is in the vehicle width direction of the towing vehicle 2 and whose minor axis is in the up-down direction. In FIG. 8A, D₁₁ indicates the longer diameter of the projected figure 624, and D₁₂ indicates the shorter diameter of the projected figure 624. The shape of the ellipse defined by the longer diameter D₁₁ and the shorter diameter D₁₂ is a reference shape of the projected figure 624. The image analysis device 63 stores the longer diameter D₁₁ and the shorter diameter D₁₂.

As shown in FIG. 8B, when the towed vehicle 3 is tilted in the left-right direction with respect to the towing vehicle 2, the shape of the projected figure 624 that is captured by the imaging device 61 is distorted, and its longer diameter D₂₁ becomes shorter than the longer diameter D₁₁ of the projected figure 624 shown in FIG. 8A. The difference between the longer diameter D₂₁ and the longer diameter D₁₁ is the amount of distortion of the projected figure 624 due to the change in hitch angle. The image analysis device 63 converts this amount of distortion to a hitch angle. The hitch angle of the combination vehicle 1 can thus be obtained. That is, in this example, the image analysis device 63 detects the hitch angle based on the size of the marker light captured by the imaging device 61 in the vehicle width direction of the towing vehicle 2.

Whether the towed vehicle 3 is tilted to the right or to the left with respect to the towing vehicle 2 can be determined based on, for example, the difference of the shapes of the right and left ends of the captured projected figure 624 from the reference shape of the projected figure 624. This is for the following reason. When the towed vehicle 3 is tilted to the right with respect to the towing vehicle 2, the right end of the captured projected figure 624 becomes larger than the reference shape while the left end of the captured projected figure 624 becomes smaller than the reference shape, according to the distance from the imaging device 61. The opposite occurs when the towed vehicle 3 is tilted to the left with respect to the towing vehicle 2.

As shown in FIG. 8C, when the towed vehicle 3 is tilted in the up-down direction with respect to the towing vehicle 2, the shape of the projected figure 624 that is captured by the imaging device 61 is distorted, and its shorter diameter D₃₂ becomes shorter than the shorter diameter D₁₂ of the projected figure 624 shown in FIG. 8A. The difference between the shorter diameter D₃₂ and the shorter diameter D₁₂ is the amount of distortion of the projected figure 624 due to the change in relative pitch angle. The image analysis device 63 converts this amount of distortion to a relative pitch angle. The relative pitch angle of the combination vehicle 1 can thus be obtained. That is, in this example, the image analysis device 63 detects the relative hitch angle based on the size of the marker light captured by the imaging device 61 in the up-down direction of the towing vehicle 2. Whether the towed vehicle 3 is tilted in the upward direction or in the downward direction with respect to the towing vehicle 2 can be determined based on, for example, the difference of the shapes of the upper and lower ends of the captured projected figure 624 from the reference shape of the projected figure 624, as in the case of the tilt in the left-right direction described above.

As shown in FIG. 8D, when the towed vehicle 3 rolls with respect to the towing vehicle 2, the shape of the projected figure 624 that is captured by the imaging device 61 is tilted with respect to the reference shape. In FIG. 8D, θ indicates the tilt angle of the major axis of the projected figure 624 with respect to the reference shape. This tilt angle θ is the amount of distortion of the projected figure 624 due to the relative roll angle, and the image analysis device 63 can obtain the relative roll angle of the combination vehicle 1 by converting this tilt angle θ to a relative roll angle. That is, in this example, the image analysis device 63 detects the relative hitch angle based on the tilt of the towing vehicle 2 of the marker light captured by the imaging device 61.

### (Third example embodiment)

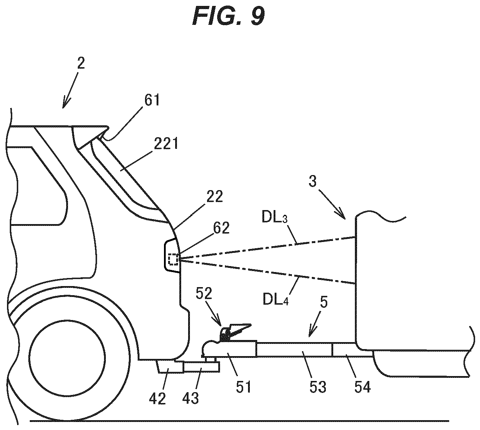

FIG. 9 is an illustration showing the positions where the imaging device 61 and the radiation device 62 are disposed in the combination vehicle 1 according to the third example embodiment. In this example, the imaging device 61 and the radiation device 62 are mounted on the rear end of the towing vehicle 2 as in the first example embodiment, but the radiation device 62 irradiates the towed vehicle 3 instead of the towed-side connecting member 5. In FIG. 9, the radiation range of the marker light from the radiation device 62 is shown by two long dashed short dashed lines DL₃, DL₄.

The imaging device 61 captures an image of a portion of the towed vehicle 3 that is irradiated with the marker light from the radiation device 62. As in the second example embodiment, the image analysis device 63 detects the hitch angle, the relative pitch angle, and the relative roll angle based on the size in the vehicle width direction, size in the up-down direction, and tilt of the marker light captured by the imaging device 61.

However, since the radiation device 62 is mounted on the towing vehicle 2, the shape of the marker light that is captured by the imaging device 61 is less likely to change according to the hitch angle etc., compared to the second example embodiment. Therefore, in this example, the radiation device 62 irradiates the towed vehicle at such a position and in such a range that part of the marker light to be captured by the imaging device 61 disappears according to the magnitude of the hitch angle.

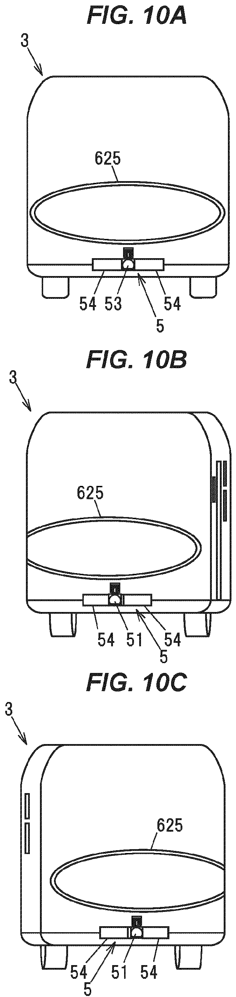

FIGS. 10A, 10B, and 10C are illustrations of the towed vehicle 3 irradiated with the marker light from the radiation device 62, as viewed from the towing vehicle 2. FIG. 10A shows a state in which the hitch angle is zero. FIG. 10B shows a state in which the towed vehicle 3 is tilted to the right as viewed from the towing vehicle 2, and FIG. 10C shows a state in which the towed vehicle 3 is tilted to the left as viewed from the towing vehicle 2. The shape of a projected figure 625 projected by the marker light emitted from the radiation device 62 is an ellipse as in the second example embodiment.

As shown in FIG. 10A, when the hitch angle is zero, the entire elliptical shape of the projected figure 625 is captured by the imaging device 61. However, when the towed vehicle 3 is tilted in the left-right direction with respect to the towing vehicle 2, a portion in the major axis direction of the projected figure 625 is located outside the front end of the towed vehicle 3 and disappears. The shape of the projected figure 625 thus changes, and the length of the projected figure 625 in the vehicle width direction of the towing vehicle 2 becomes shorter. The image analysis device 63 can accurately obtain the hitch angle based on the amount of change in shape of the projected figure 625.

### (Effects of the embodiment and the first to third example embodiments)

According to the embodiment and the first to third example embodiments described above, the marker light emitted from the radiation device 62 is captured by the imaging device 61, and the image analysis device 63 detects the relative angle of the towed vehicle 3 with respect to the towing vehicle 2 by analyzing the captured image. Therefore, it is possible to detect the relative angle of the towed vehicle 3 with respect to the towing vehicle 2 without installing a marker such as a panel or a sheet on the towed vehicle 3.

### (Additional Notes)

Although the present invention is described above based on the embodiment and the example embodiments, the embodiment and the example embodiments are not intended to limit the invention according to the claims. It should be noted that not all combinations of the features described in the embodiments are essential as means for solving the problem of the invention. The present invention may be implemented in a modified form as appropriate by omitting part of the components or adding or replacing components without departing from the spirit and scope of the present invention. For example, the present invention can be implemented in the following modified forms.

The above embodiment and example embodiments illustrate the case where the imaging device 61 is mounted on the towing vehicle 2 and captures an image of the towed vehicle 3. Alternatively, the imaging device 61 may be mounted on the towed vehicle 3 so that the imaging device 61 captures an image of the towing vehicle 2. In this case, the radiation device 62 emits the marker light from the towed vehicle 3 toward the towing vehicle 2.

The above second and third example embodiments illustrate the case where the projected figures 624, 625 have an elliptical shape. However, the shapes of the projected figures 624, 625 are not limited to this, and the projected figures 624, 625 may have any shape such as a polygon or a polyline as long as they have predetermined lengths in the vehicle width direction and up-down direction of the towing vehicle 2.

### Reference Signs List

1 COMBINATION VEHICLE
2 TOWING VEHICLE
3 TOWED VEHICLE
4 TOWING-SIDE CONNECTING MEMBER
5 TOWED-SIDE CONNECTING MEMBER
6 RELATIVE ANGLE DETECTION DEVICE
61 IMAGING DEVICE
62 RADIATION DEVICE
63 IMAGE ANALYSIS DEVICE

## Claims

1. A relative angle detection device for a combination vehicle, the relative angle detection device being used in the combination vehicle in which a towing vehicle and a towed vehicle are connected by a towing-side connecting member and a towed-side connecting member, the relative angle detection device comprising:
an imaging device that captures an image of one of the towing vehicle and the towed vehicle from the other;
a radiation device that emits marker light to a position where the image is to be captured by the imaging device; and
an image analysis device that analyzes the image captured by the imaging device to detect a relative angle of the towed vehicle with respect to the towing vehicle.

2. The relative angle detection device for the combination vehicle according to claim 1, wherein the imaging device is mounted on the towing vehicle and captures an image of the towed vehicle.

3. The relative angle detection device for the combination vehicle according to claim 1, wherein:
the radiation device projects a figure with a predetermined shape by the marker light; and
the image analysis device detects the relative angle based on a shape of the figure that is captured.

4. The relative angle detection device for the combination vehicle according to claim 1, wherein the relative angle that is detected by the image analysis device includes a hitch angle of the combination vehicle.

5. The relative angle detection device for the combination vehicle according to claim 1, wherein the radiation device emits the marker light when the combination vehicle reverses.

6. The relative angle detection device for the combination vehicle according to any one of claims 1 to 4, wherein:
the imaging device and the radiation device are mounted on the towing vehicle; and
the towed-side connecting member and a road surface on both sides of the towed-side connecting member in a vehicle width direction of the towing vehicle are included in a radiation range of the marker light from the radiation device.

7. The relative angle detection device for the combination vehicle according to claim 6, wherein the image analysis device detects a hitch angle of the combination vehicle based on a position in the vehicle width direction of the towed-side connecting member in the radiation range of the marker light.

8. The relative angle detection device for the combination vehicle according to claim 6, wherein the image analysis device detects a pitch angle of the towed vehicle with respect to the towing vehicle based on a difference in position in a front-rear direction of the towing vehicle between the towed-side connecting member and the road surface that are irradiated with the marker light.

9. The relative angle detection device for the combination vehicle according to any one of claims 1 to 5, wherein:
the imaging device is mounted on the towing vehicle; and
the radiation device is mounted on the towed-side connecting member or the towed vehicle and irradiates the towed vehicle.

10. The relative angle detection device for the combination vehicle according to claim 9, wherein the image analysis device detects a hitch angle of the combination vehicle based on a size of the marker light that is captured in a vehicle width direction of the towing vehicle.

11. The relative angle detection device for the combination vehicle according to claim 9, wherein the image analysis device detects a pitch angle of the towed vehicle with respect to the towing vehicle based on a size of the marker light that is captured in an up-down direction of the towing vehicle.

12. The relative angle detection device for the combination vehicle according to claim 9, wherein the image analysis device detects a roll angle of the towed vehicle with respect to the towing vehicle based on a tilt of the marker light that is captured.

13. The relative angle detection device for the combination vehicle according to claim 9, wherein the radiation device irradiates the towed vehicle at such a position and in such a range that part of the marker light to be captured by the imaging device disappears according to a magnitude of a hitch angle of the combination vehicle.
